# EUROPÄISCHE PATENTSCHRIFT

(11) **EP 0 803 176 B1**
(45) Veröffentlichungstag und Bekanntmachung des Hinweises auf die Patenterteilung: **19.03.2003**
(21) Anmeldenummer: 97105667.6
(22) Anmeldetag: 05.04.1997
(51) Int. Cl.: A01C 5/06

(54) **Vorrichtung zum Einstellen von wenigstens einem Andrückrad und Reihenpflanzeinheit mit einer solchen Vorrichtung**
Apparatus for mounting at least a press wheel and seed planting implement with such an apparatus
Dispositif pour monter au moins une roue plombeuse et semoir comportant tel dispositif

(30) Priorität: 22.04.1996 US 636046
(43) Veröffentlichungstag der Anmeldung: 29.10.1997
(73) Patentinhaber: DEERE & COMPANY, Moline, Illinois 61265-8098 (US)
(72) Erfinder: Bergland, Norman Robert, Moline, Illinois 61265 (US); Hubbard, Loyd Thomas, Jr., Hampton, Illinois 61256 (US)
(74) Vertreter: Magin, Ludwig Bernhard

(56) Entgegenhaltungen:
- EP-A- 0 141 323
- AU-A- 515 956
- DE-B- 1 295 260
- FR-A- 1 170 523

## Beschreibung

Die Erfindung betrifft eine Vorrichtung zum Einstellen von wenigstens einem Andrückrad, das drehbar von einem Halter getragen wird, der um eine vertikale Achse schwenkbar an einem Geräterahmen einer Sä- oder Pflanzmaschine angelenkt und in einer einstellbaren Position bezüglich der vertikalen Achse am Geräterahmen festlegbar ist, und eine Reihenpflanzeinheit mit einer solchen Vorrichtung.

Eine Vorrichtung zum Einstellen von Andrückrädern ist aus der EP-A-0 141 323 bekannt.

Die US-A-1,901,299 offenbart zwei Furchenschließ- und Andrückräder, die V-förmig und drehbar an einem Halter angebracht sind. Die Verbindung mit dem Halter erfolgt über einen vertikal verlaufenden Gewindestift und Öffnungen in den Drehachsen der Andrückräder, in denen der Gewindestift aufgenommen wird. Mittels einer Mutter werden die Drehachsen an dem Gewindestift reibschlüssig festgelegt.

Diese Vorrichtung ist insofern nachteilig, als sie mit dem Werkzeug schwer zugänglich und die Andrückräder nicht ausreichend fest gegen eine Schwenkbewegung halten kann. Es ist ferner schwierig, den unabhängig voneinander auf den Gewindestift aufgesetzten Drehachsen die gleiche Neigung in Bezug auf die Fahrtrichtung zu verleihen. Schließlich ist es mit dieser Vorrichtung nicht möglich, die Andrückräder dauerhaft seitlich so zu verschieben, daß sie eine seitwärts versetzte Furche zentrisch zwischen sich aufnehmen.

Das der Erfindung zugrunde liegende Problem wird darin gesehen, daß ein oder mehrere Andrückräder nicht in bezug auf die Furche seitlich ausgerichtet und nicht ausreichend fest in ihrer Stellung gehalten werden können.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann aufgrund der flächigen Anlage eine höhere Haltekraft erzeugt werden. Außerdem ermöglicht es der Versatz zwischen der Drehachse des Andrückrades einerseits und der Anschlußstelle des Halters an dem Geräterahmen andererseits, daß das Andrückrad seitlich versetzt werden kann und somit an der richtigen Stelle in bezug auf die Furche abrollt. Zur Anbringung des Rahmens an der gewölbten Oberfläche des Geräterahmens kann er selbst eine komplementär gewölbte Oberfläche, z. B. Seitenwand aufweisen.

Alternativ zu einer gewölbten Ausbildung des Rahmens kann zwischen diesen und den Geräterahmen eine oder mehrere Lagerbüchsen eingefügt werden, die eine entsprechend gewölbte Fläche aufweisen. Die Lagerbüchsen können mit Klemmitteln oder formschlüssig gehalten werden.

Die Festlegung des Rahmens bzw. der Lagerbüchsen an dem Geräterahmen erfolgt in einer kostengünstigen Weise mittels Einstellschrauben, die zum Verstellen des Halters jeweils gelöst werden können.

Ausreichende Verstellmöglichkeiten bei dennoch formschlüssiger Halterung lassen sich durch die Verwendung von Schlitzen in den Seitenwänden des Geräterahmens erreichen.

An den Lagerhülsen können halbkreisförmige Vorsprünge vorgesehen werden, die in die Schlitze ragen und für eine gewisse Führung sorgen, bzw. den Verstellweg begrenzen.

Wenn die gewölbten Flächen und Oberflächen an dem Halter und dem Geräterahmen und gegebenenfalls der Lagerhülsen symmetrisch, also spiegelbildlich, zueinander vorgesehen sind, ergibt sich eine gleichförmige Verstellung beim Schwenken des Halters um eine ideelle vertikale Schwenkachse.

Eine mit der vorbeschriebenen Vorrichtung ausgestattete Reihenpflanzeinheit, die einzeln oder zu mehreren an einem Werkzeugträger angebracht sein kann, ermöglicht die Bildung eines ausreichend festen Saatbetts, da der Boden im optimalen Bereich neben der Furche angedrückt wird. Diese Wirkung kann bereits mit nur einem einzigen Andrückrad erzielt werden, das entsprechend zum Andrücken des Bodens ausgebildet ist.

Ein Verdichten des Bodens im Seitenbereich der Furche und ein Beiwerfen von Erdreich wird dadurch erzielt, daß zwei Andrückräder vorgesehen werden, die V-förmig zueinander verlaufen.

In der Zeichnung ist ein nachfolgend näher beschriebenes Ausführungsbeispiel der Erfindung dargestellt. Es zeigt:
- Fig. 1: eine erfindungsgemäße Reihenpflanzeinheit mit einer Vorrichtung zum Andrücken des Erdreichs in Seitenansicht,
- Fig. 2: einen Ausschnitt der Vorrichtung in Draufsicht,
- Fig. 3: den Ausschnitt aus Figur 2 in Seitenansicht und
- Fig. 4: eine in der Vorrichtung verwendete Lagerhülse in perspektivischer Darstellung.

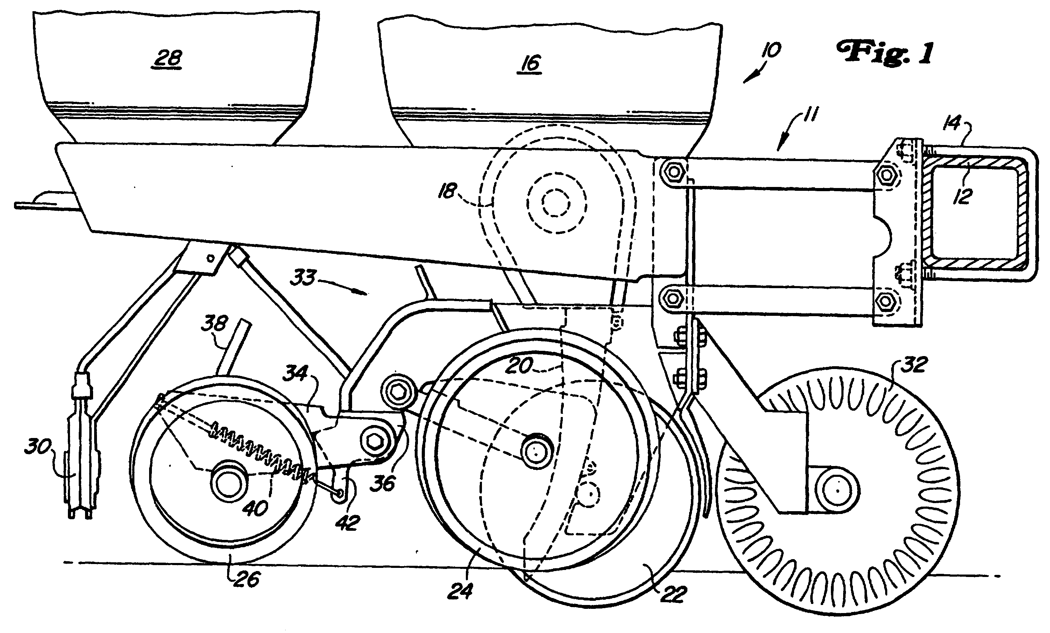

Figur 1 zeigt eine landwirtschaftliche Reihenpflanzeinheit 10. Diese Reihenpflanzeinheit 10 ist in herkömmlicher Weise mittels U-Bügeln 14 mit einem Parallellenkersystem 11 an einen sich quer erstreckenden Werkzeugträger 12 angeschlossen. Die Reihenpflanzeinheit 10 ist mit einem Saatgutkasten 16 versehen, der Saatgut einem Dosiergerät 18 zuführt. Das Dosiergerät 18 leitet das dosierte Saatgut in ein Särohr 20, um es in einer Saatfurche abzulegen. Die Saatfurche wird mittels eines Furchenöffners 22 gebildet. Einstellräder 24 bestimmen die Eindringtiefe des Furchenöffners 22. Ein Paar Andrückräder 26 zum Verdichten des Bodens und des Saatguts schließt den Schnitt bzw. die Furche nachdem das Saatgut mittels des Särohrs 20 in die Furche abgelegt worden ist. Die dargestellte Reihenpflanzeinheit 10 ist auch mit einem Vorratsbehälter 28 für Schädlingsbekämpfungsmittel versehen, von wo aus Schädlingsbekämpfungsmittel mittels einer Ausgabeeinheit 30 auf den Boden abgegeben wird. Ein geeignetes nicht gezeigtes Schädlingsbekämpfungsmitteldosiergerät steuert die Ausbringung der Pestizide. Weiterhin ist ein gewelltes Scheibensech 32 vor dem Furchenöffner 22 vorgesehen, um das Öffnen der Saatfurche zu vereinfachen. All die genannten Elemente sind an einem Geräterahmen 33 der Reihenpflanzeinheit 10 angebracht.

Die vorgenannte Reihenpflanzeinheit 10 ist von relativ herkömmlicher Bauweise. Typischerweise ist eine Vielzahl von Reihenpflanzeinheiten 10 an dem Werkzeugträger 12 angebracht, so daß ein Landwirt mehr als eine Reihe säen oder pflanzen kann, während er einmal über das Feld fährt. Obwohl die vorliegende Erfindung in Verbindung mit einer Reihenpflanzeinheit 10 dargestellt und beschrieben ist, kann sie auch bei einer Säeinheit, z. B. einer Sämaschine verwendet werden, d. h., der Schutz soll nicht auf eine Pflanzeinheit oder Pflanzmaschine beschränkt werden.

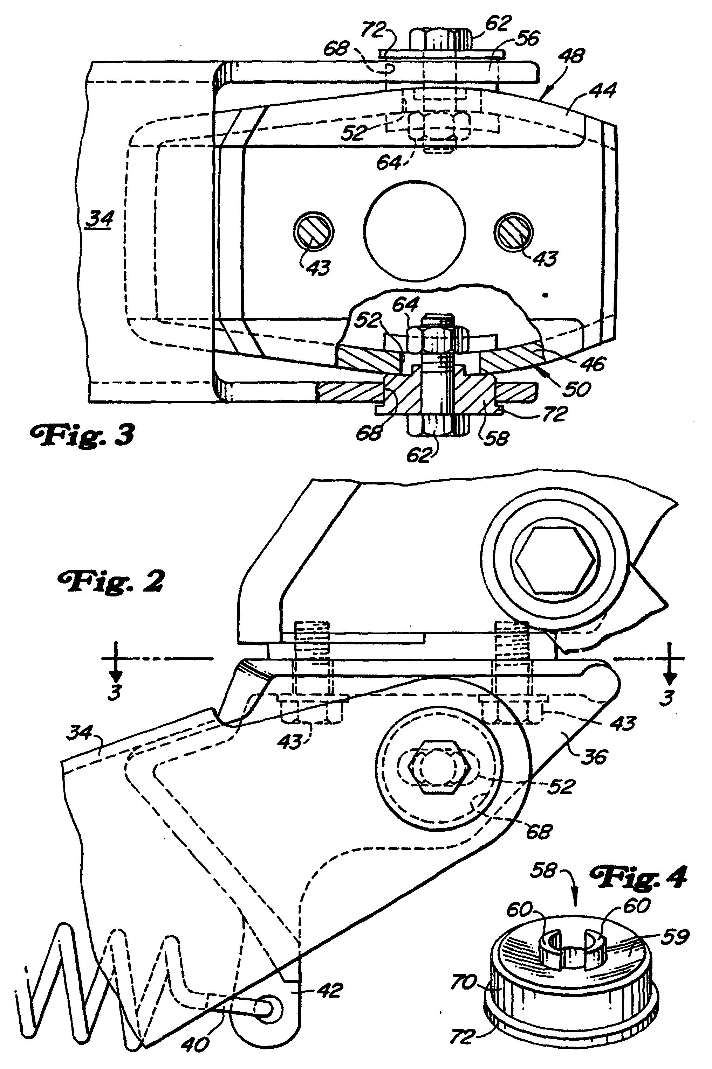

Die Andrückräder 26 sind drehbar an einem Halter 34 befestigt, der selbst an einem Radträger 36 angebracht ist. Der Halter 34 ist mit einem Griff 38 versehen, der verstellt werden kann, um das Maß des Bodendrucks, der von der Reihenpflanzeinheit 10 auf die Andrückräder 26 übertragen wird, zu steuern. Der Griff 38 steht mit einer Feder 40 in Verbindung, die zudem an eine sich nach unten erstreckende Lasche 42 an dem Radträger 36 angeschlossen ist. Die Einzelheiten des Radträgers 36 sind am besten in den Figuren 2 bis 4 dargestellt. Der Radträger 36 ist ein Gußteil, der mittels Schrauben 43 an die Reihenpflanzeinheit 10 angeschraubt ist. Der Radträger 36 weist eine linke und eine rechte Seitenwand 44 und 46 auf, die jeweils linke und rechte gewölbte Oberflächen 48 bzw. 50 aufweisen. Zusätzlich sind die linke und die rechte Seitenwand 44, 46 mit sich längs erstreckenden Schlitzen 52 versehen.

Der Halter 34 besitzt eine linke und eine rechte gewölbte Lagerhülse 56 bzw. 58. Gewölbte Flächen 59 der Lagerhülsen 56, 58 berühren die gewölbten Oberflächen 48, 50 des Radträgers 36. Die Lagerhülsen 56, 58 sind auch mit zwei halbkreisförmigen Vorsprüngen 60 versehen, die in den sich längs erstreckenden Schlitzen 52 aufgenommen werden. Zwei Einstellschrauben 62 mit Muttern 64 werden benutzt, um den Halter 34 an dem Radträger 36 festzulegen. Diese Schrauben 62 erstrecken sich durch die Lagerhülsen 56 und 58 und durch die sich längs erstreckenden Schlitze 52 und werden mittels der Muttern 64 lagegesichert.

Die Lagerhülsen 56 und 58 sind in großen runden Ausnehmungen 68 in den Seitenwänden 44, 46 des Halters 34 aufgenommen. Jede Lagerhülse 56, 58 enthält einen zylindrischen Körper 70 mit einer sich nach außen erstreckenden Schulter 72. Die sich nach außen erstreckende Schulter 72 liegt an der Außenseite der Seitenwände 44, 46 des Halters 34 an, wie dies in Figur 3 gezeigt ist.

Zum Einstellen der seitlichen Stellung der Andrückräder 26 löst eine Bedienungsperson zunächst die Einstellschrauben 62 und schwenkt dann den Halter 34 um eine vertikale Achse, bis die Andrückräder 26 in der Querrichtung korrekt positioniert sind. Die Einstellschrauben 62 werden dann wieder angezogen und legen den Halter 34 fest. Auf diese Weise wird eine einfache Vorrichtung zum Ändern der seitlichen Stellung der Andrückräder 26 geschaffen.

## Patentansprüche

1. Vorrichtung zum Einstellen von wenigstens einem Andrückrad (26), das drehbar von einem Halter (34) getragen wird, der um eine vertikale Achse schwenkbar an einem Geräterahmen (33) einer Sä- oder Pflanzmaschine angelenkt und in einer einstellbaren Position bezüglich der vertikalen Achse am Geräterahmen (33) festlegbar ist, **dadurch gekennzeichnet, daß** der Geräterahmen (33) mit wenigstens einer gewölbten Oberfläche (48, 50) an einer Seitenwand (44, 46) versehen ist, an der der Halter (34) mittelbar oder unmittelbar zur Anlage bringbar ist und die Drehachse des Andrückrades (26) einen horizontalen Abstand zu der Anschlußstelle des Halters (34) an dem Geräterahmen (33) aufweist.

2. Vorrichtung nach Anspruch 1, **dadurch gekennzeichnet, daß** der Halter (34) mittels wenigstens einer eine entsprechend gewölbte Fläche (59) aufweisenden Lagerbüchse (56, 58) an dem Geräterahmen (33) festlegbar ist.

3. Vorrichtung nach einem oder mehreren der vorherigen Ansprüche, **dadurch gekennzeichnet, daß** zur Festlegung der Lagerbüchse (56, 58) an den Seitenwänden (44, 46) des Geräterahmens (33) wenigstens eine sich durch sie erstreckende Einstellschraube (62) vorgesehen ist.

4. Vorrichtung nach einem oder mehreren der vorherigen Ansprüche, **dadurch gekennzeichnet, daß** in den Seitenwänden (44, 46) wenigstens ein Schlitz (52) zur Aufnahme der Einstellschraube(n) (62) vorgesehen ist.

5. Vorrichtung nach einem oder mehreren der vorherigen Ansprüche, **dadurch gekennzeichnet, daß** die Lagerhülse (56, 58) mit halbkreisförmigen Vorsprüngen (60) versehen ist, die gleitend von dem Schlitz (52) aufgenommen werden.

6. Vorrichtung nach einem oder mehreren der vorherigen Ansprüche, **gekennzeichnet durch** eine spiegelbildliche Anordnung der gewölbten Oberflächen (48, 50) an dem Halter (34), der Lagerhülsen (56, 58) und zweier Andrückräder (26).

7. Reihenpflanzeinheit (10) mit einem Geräterahmen (33) zur Aufnahme eines Furchenöffners (22), eines Särohrs (20) und eines wenigstens ein Andrückrad (26) tragenden Halters (34), wobei der Halter (34) mittels einer Vorrichtung nach einem oder mehreren der vorherigen Ansprüche 1 bis 7 an dem Geräterahmen (33) angebracht ist.

8. Reihenpflanzeinheit (10) nach Anspruch 7, **dadurch gekennzeichnet, daß** zwei Andrückräder (26) vorgesehen sind, die die Furche mittig zwischen sich aufnehmen und vorzugsweise V-förmig zueinander ausgerichtet sind.

## Claims

1. Device for adjusting at least one firming wheel (26), which is rotatably carried by a retainer (34), the retainer (34) attached pivotally about a vertical axis to a unit frame (33) of a seeding or planting machine, the retainer (34) can be fixed in an adjustable position about the vertical axis to the unit frame (33), **characterized in that** the unit frame (33) is provided with at least one radiused surface (48, 50) at a side wall (44, 46) to which the retainer (34) can be applied directly or indirectly and **in that** the rotational axis of the firming wheel (26) has a horizontal distance to the connection spot of the retainer (34) at the unit frame (33).

2. Device according to claim 1, **characterized in that** the retainer (34) can be fastened at the unit frame (33) by means of at least one bearing bushing (56, 58) having a corrsesponding radiused surface (59).

3. Device according to one or more of the previous claims, **characterized in that** for fastening the bearing bushing (56, 58) at the side walls (44, 46) of the unit frame (33) at least one adjusting screw (62) penetrating them is provided.

4. Device according to one or more of the previous claims, **characterized in that** in the side walls (44, 46) at least one slot (52) for receiving the adjusting screw(s) (62) is provided.

5. Device according to one or more of the previous claims, **characterized in that** the bearing bushing (56, 58) is provided with semi-circular projections (60), which are received in the slot (52) in a slideable manner.

6. Device according to one or more of the previous claims, **characterized by** a mirror image like arrangement of the radiused surfaces (48, 50) at the retainer (34), of the bearing bushings (56, 58) and of two firming wheels (26).

7. Row planter unit (10) having a unit frame (33) to carry a furrow opener (22), a seed tube (20) and a retainer (34) carrying at least one firming wheel (26), whereas the retainer (34) is attached to the unit frame (33) by means of a device according to one or more of the preceding claims 1 - 7.

8. Row planter unit (10) according to claim 7, **characterized in that** two firming wheels (26) are provided, which encompass the furrow between each other and which are arranged like a "V" with respect to each other.

## Revendications

1. Dispositif pour monter au moins une roue plombeuse (26) portée de manière tournante par un support (34), qui est articulé de manière pivotante autour d'un axe vertical sur un châssis (33) d'un semoir ou d'une planteuse et qui peut être fixé sur le châssis (33) dans une position réglable par rapport à l'axe vertical, **caractérisé en ce que** le châssis (33) est muni sur sa paroi latérale (44, 46) d'au moins une surface bombée (48, 50), sur laquelle le support (34) peut s'appuyer directement ou indirectement et **en ce que** l'axe de rotation de la roue plombeuse (26) présente un espacement horizontal par rapport au point de raccordement du support (34) sur le châssis (33).

2. Dispositif selon la revendication 1, **caractérisé en ce que** le support (34) peut être fixé sur le châssis (33) à l'aide d'au moins un coussinet (56, 58) présentant une surface bombée de manière correspondante (59).

3. Dispositif selon l'une ou plusieurs des revendications précédentes, **caractérisé en ce que** pour la fixation du coussinet (56, 58) sur les parois latérales (44, 46) du châssis (33) il est prévu au moins une vis de réglage (62) le traversant.

4. Dispositif selon l'une ou plusieurs des revendications précédentes, **caractérisé en ce qu'**au moins une fente (52) pour recevoir la(les) vis de réglage (62) est prévue dans les parois latérales (44, 46).

5. Dispositif selon l'une ou plusieurs des revendications précédentes, **caractérisé en ce que** le coussinet (56, 58) est muni d'avancées en forme de demi-cercles (60), qui sont placées de manière coulissante dans la fente (52).

6. Dispositif selon l'une ou plusieurs des revendications précédentes, **caractérisé par** une disposition en symétrie par réflexion des surfaces bombées (48, 50) sur le support (34), des coussinets (56, 58) et de deux roues plombeuses (26).

7. Semoir en ligne (10) avec un châssis (33) pour recevoir un soc de semoir (22), un tube de semoir (20) et un support (34) portant au moins une roue plombeuse (26), le support (34) étant disposé sur le châssis (33) à l'aide d'un dispositif selon l'une ou plusieurs des revendications précédentes 1 à 7.

8. Semoir en ligne (10) selon la revendication 7, **caractérisé en ce que** deux roues plombeuses (26), qui portent le soc de semoir en position centrale entre elles et qui sont disposées de préférence en forme de V l'une par rapport à l'autre, sont prévues.
